# EUROPÄISCHE PATENTSCHRIFT

(11) **EP 1 215 472 B1**
(45) Veröffentlichungstag und Bekanntmachung des Hinweises auf die Patenterteilung: **12.12.2007**
(21) Anmeldenummer: 01124613.9
(22) Anmeldetag: 15.10.2001
(51) Int. Cl.: G01K 1/08

(54) **Temperatursensor**
Temperature sensor
Capteur de température

(30) Priorität: 13.12.2000 DE 10062041; 09.10.2001 DE 10149628
(43) Veröffentlichungstag der Anmeldung: 19.06.2002
(73) Patentinhaber: Beru AG, 71636 Ludwigsburg (DE)
(72) Erfinder: Marto, H.-Arno, 71636 Ludwigsburg (DE); Lehmann, Heiner, 71636 Ludwigsburg (DE); Berdel, Erich, 71636 Ludwigsburg (DE)
(74) Vertreter: Pohlmann, Eckart

(56) Entgegenhaltungen:
- DE-A- 3 302 005
- GB-A- 1 190 005
- GB-A- 2 184 554
- US-A- 3 434 207
- US-A- 5 743 646
- US-A- 5 959 524

## Beschreibung

Die Erfindung betrifft einen Temperatursensor nach dem Gattungsbegriff des Patentanspruchs 1, insbesondere für Temperaturen oberhalb 600 °C.

Ein derartiger Temperatursensor ist aus der US-A-3 434 207 bekannt und mit seinem Messelement vollständig in ein temperaturfestes isolierendes Material in der Schutzhülse eingebettet.

In der Temperaturmesstechnik werden häufig Temperatursensoren eingesetzt, und zwar zur eigentlichen Temperaturmessung oder zur Erzeugung eines temperaturabhängigen Steuersignals. Bei Einsatz solcher Temperatursensoren bei hohen Temperaturen, insbesondere über 600°C sind diese Temperatursensoren aus vielen Bauelementen zusammengesetzt, die eine verhältnismäßig aufwendig Aufbau- und Verbindungstechnik erfordern; gleichzeitig sind die elektrischen Kontaktierungen durch die hohen Temperaturen und gegebenenfalls durch ein aggressives Umfeld hoch belastet, so dass beide Faktoren Ursache von Funktionsstörungen sein können. Dieses wird auf dem diesbezüglichen technischen Gebiet als Nachteil empfunden.

Aufgabe der Erfindung ist es, unter Überwindung der aus dem Stand der Technik bekannten Nachteile einen Temperaturesensor, insbesondere zum Einsatz bei hohen Temperaturen, insbesondere über 600°C, zur Verfügung zu stellen, der einfach aufgebaut und herzustellen ist und der dennnoch höhere Funktionssicherheit und schnellere Reaktionszeit als die vorbekannten Temperatursensoren bietet

Erfindungsgemäß wird diese Aufgabe durch den Temperatursensam gemäß Anspruch 1 gelöst. Weitere vorteilhafte Ausgestaltungen der Erfindung ergeben sich aus den nachfolgenden Ansprüchen 2 bis 10.

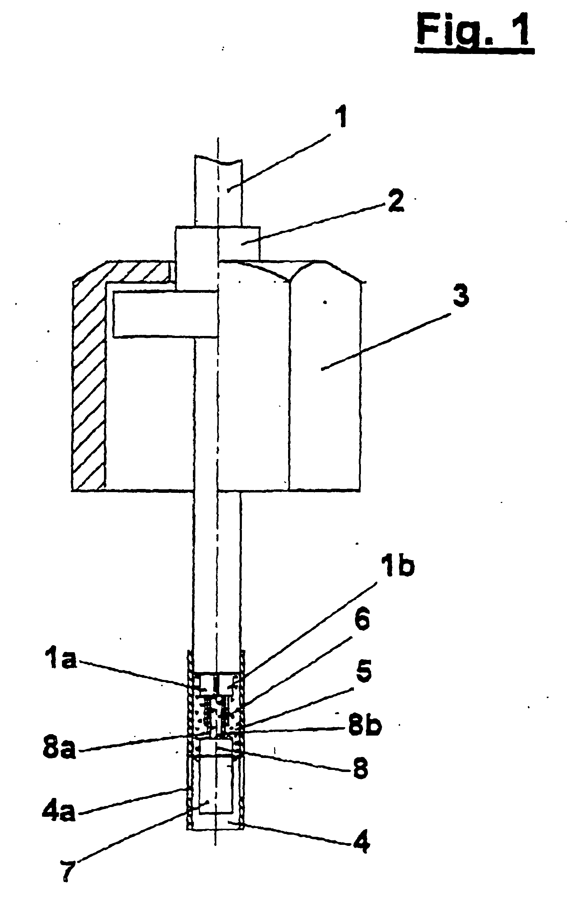

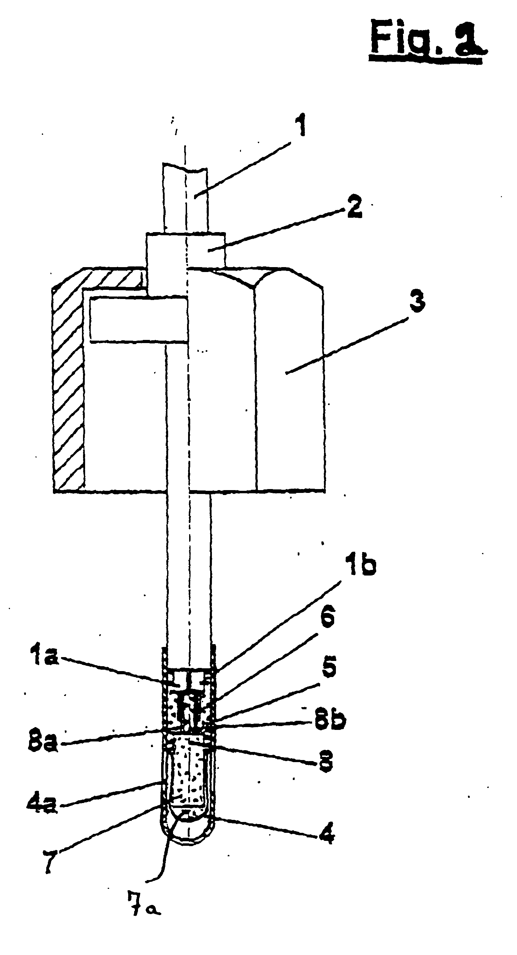

Die Erfindung wird anhand der beiliegenden Figuren 1 und 2 näher erläutert.

In Figur 1 wird eine bevorzugte Ausführungsform des erfindungsgemäßen Temperatursensors wiedergegeben. Hierbei weist der Temperatursensor ein Mantelleiterrohr 1 auf, in dem zwei Leiter 1a und 1b, voneinander isoliert, geführt sind. Die am dem Mantelleiterrohr 1 austretenden Leiter 1a und 1b sind mit Anschlüssen 8a und 8b eines Meßelementes 7 verbunden. Dieses Meßelement 7 besteht vorzugsweise aus einem NTC- oder PTC-Material, bevorzugt aus Platin oder einer Platinlegierung auf einem Keramikträger. Im Bereich des Meßelements 7 ist das Mantelleiterrohr 1 fest mit einer Schutzhülse 4 verbunden, die Öffnungen 1a aufweisen kann. In besonderen Anwendungsfällen kann jedoch die Schutzhülse 4 auch rundum geschlossen sein. Der anschlußseitige Bereich 8 des Meßelements 7 ist in einem temperaturbeständigen, elektrisch nicht leitendem Material 5, bevorzugt Glas oder Keramik, vergossen.

Ein längeres Meßelement 7 kann zur mechanischen Stabilisation auch mit einem hochtemperaturbeständigen Edelstahlgeflecht fixiert sein.

Am anderen Ende des Mantelleiterrohres 1 sind Befestigungsmittel 2 vorgesehen. Bevorzugt handelt es sich hierbei um eine an dem Mantelleiterrohr 1 fixierte Befestigungshülse über die mit einer Überwurfmutter 3 der Temperatursensor an seinem Einsatzort befestigt sein kann. Alternativ hierzu kann die Befestigungshülse ein Außengewinde zum Eindrehen in eine Gewindebohrung am Einsatzort des Temperatursensors aufweisen.

Der erfindungsgemäße Temperatursensor ist insbesondere zum Einsatz bei hohen Temperaturen über 600°C geeignet. Durch seinen erfindungsgemäßen Aufbau ist er einfach herzustellen und einfach zu montieren, wodurch sich Fertigung und Montage einfacher und kostengünstiger gestalten. Gleichzeitig wird eine erhöhte Funktionssicherheit erreicht, weil das Meßelement 7 und die Anschlüsse 1a, 1b, 6, 8a, 8b vor mechanischer und/oder chemischer Beschädigung wirkungsvoll geschützt sind.

## Patentansprüche

1. Temperatursensor mit einem Messelement (7) mit Zu- und Ableitung, das bei Temperaturänderungen seinen Widerstandswert ändert und in einer Schutzhülse (4) angeordnet ist, wobei das Messelement (7) im anschlussseitigen Bereich (8) mit Anschlüssen (8a, 8b) versehen ist, die direkt mit zwei Leitern (1a, 1b) innerhalb eines Mantelrohres (1) verbunden sind, **dadurch gekennzeichnet, dass** das Messelement (7) teilweise, nämlich am anschlussseitigen Bereich (8) mit den Anschlüssen (8a, 8b) im umgebenden Bereich der Schutzhülse (4) in einem temperaturfesten, elektrisch nicht leitenden Material (5) vergossen ist und am übrigen Bereich offen liegt.

2. Temperatursensor nach Anspruch 1, **dadurch gekennzeichnet, dass** die Schutzhülse (4) mit Öffnungen (4a) versehen ist.

3. Temperatursensor nach Anspruch 1 oder 2, **dadurch gekennzeichnet, dass** das Messelement (7) mit den Leitern (1a, 1b) unmittelbar, beispielsweise durch Lötung, Schweißung oder Krimpung verbunden ist.

4. Temperatursensor nach Anspruch 1, 2 oder 3 **dadurch gekennzeichnet, dass** das Messelement (7) aus einem NTC- oder PTC-Material, insbesondere aus Platin oder einer Platinelegierung besteht.

5. Temperatursensor nach Anspruch 4, **dadurch gekennzeichnet, dass** das Messelement (7) als Flachwiderstand oder Rundwiderstand aus Platin auf einem Keramikträger ausgebildet ist.

6. Temperatursensor nach einem der vorhergehenden Ansprüche, **dadurch gekennzeichnet, dass** das Messelement (7) zur mechanischen Stabilisierung von einem Schutzdrahtgeflecht fixiert ist.

7. Temperatursensor nach einem der vorhergehenden Ansprüche, **dadurch gekennzeichnet, dass** an dem Mantelrohr (1) Befestigungsmittel (2) angeordnet sind.

8. Temperatursensor nach Anspruch 7, **dadurch gekennzeichnet, dass** die Befestigungsmittel (2) aus einer Befestigungshülse bestehen, die mit einer Überwurfmutter (3) zusammenarbeitet.

9. Temperatursensor nach Anspruch 8, **dadurch gekennzeichnet, dass** die Befestigungshülse mit einem Außengewinde versehen ist.

10. Temperatursensor nach einem der vorhergehenden Ansprüche, **dadurch gekennzeichnet, dass** der anschlussseitige Bereich (8) des Messelements (7) in Glas oder Keramik vergossen ist.

## Claims

1. Temperature sensor having a measuring member (7) with an incoming line and an outgoing line, which measuring member (7) changes its resistance value when there is a change in temperature and is arranged in a protective sleeve (4), the measuring member (7) being provided, in the terminal-side region (8), with terminals (8a, 8b) that are connected directly to two conductors (1a, 1b) inside a tubular shell (1), **characterised in that** the measuring member (7) is encapsulated partially, namely at the terminal-side region (8), with the terminals (8a, 8b) in a temperature-resistant, electrically non-conductive material (5) in the surrounding region of the protective sleeve (4) and lies exposed in the remaining region.

2. Temperature sensor according to claim 1, **characterised in that** the protective sleeve (4) is provided with openings (4a) .

3. Temperature sensor according to claim 1 or 2, **characterised in that** the measuring member (7) is connected directly to the conductors (1a, 1b), for example by soldering, welding or crimping.

4. Temperature sensor according to claim 1, 2 or 3, **characterised in that** the measuring member (7) is composed of an NTC or PTC material, especially of platinum or a platinum alloy.

5. Temperature sensor according to claim 4, **characterised in that** the measuring member (7) is in the form of a flat resistor or round resistor of platinum on a ceramic carrier.

6. Temperature sensor according to any one of the preceding claims, **characterised in that** the measuring member (7) is fixed in position by a protective wire mesh for the purpose of mechanical stabilisation.

7. Temperature sensor according to any one of the preceding claims, **characterised in that** securing means (2) are arranged on the tubular shell (1).

8. Temperature sensor according to claim 7, **characterised in that** the securing means (2) comprise a securing sleeve which cooperates with a union nut (3).

9. Temperature sensor according to claim 8, **characterised in that** the securing sleeve is provided with an external thread.

10. Temperature sensor according to any one of the preceding claims, **characterised in that** the terminal-side region (8) of the measuring member (7) is encapsulated in glass or ceramic material.

## Revendications

1. Capteur de température comportant un élément de mesure (7) avec alimentation et dérivation, qui modifie sa valeur de résistance lors de variations de température et est agencé dans une douille protectrice (4), dans lequel l'élément de mesure (7) est pourvu, dans la zone du côté bornes (8), de bornes (8a, 8b) qui sont directement connectées à deux conducteurs (1a, 1b) à l'intérieur d'un tube gainé (1), **caractérisé en ce que** l'élément de mesure (7) est moulé partiellement, à savoir dans la zone du côté bornes (8) comportant les bornes (8a, 8b) dans la zone entourant la douille protectrice (4), dans un matériau résistant aux températures, électriquement non conducteur (5) et est découvert dans la zone restante.

2. Capteur de température selon la revendication 1, **caractérisé en ce que** la douille protectrice (4) est pourvue d'ouvertures (4a).

3. Capteur de température selon l'une quelconque des revendications 1 ou 2, **caractérisé en ce que** l'élément de mesure (7) est directement connecté aux conducteurs (1a, 1b), par exemple, par brasage, soudage ou sertissage.

4. Capteur de température selon l'une quelconque des revendications 1, 2 ou 3, **caractérisé en ce que** l'élément de mesure (7) est constitué d'un matériau NTC ou de PTC, en particulier de platine ou d'un alliage de platine.

5. Capteur de température selon la revendication 4, **caractérisé en ce que** l'élément de mesure (7) se présente sous la forme d'une résistance plate ou d'une résistance ronde en platine sur un support céramique.

6. Capteur de température selon l'une quelconque des revendications précédentes, **caractérisé en ce que** l'élément de mesure (7) est fixé, pour assurer la stabilisation mécanique, par un fil de protection tressé.

7. Capteur de température selon l'une quelconque des revendications précédentes, **caractérisé en ce que** des moyens de fixation (2) sont agencés sur le tube gainé (1).

8. Capteur de température selon la revendication 7, **caractérisé en ce que** les moyens de fixation (2) sont constitués d'une douille de fixation qui coopère avec un écrou d'accouplement (3).

9. Capteur de température selon la revendication 8, **caractérisé en ce que** la douille de fixation est pourvue d'un filet externe.

10. Capteur de température selon l'une quelconque des revendications précédentes, **caractérisé en ce que** la zone du côté bornes (8) de l'élément de mesure (7) est moulée dans du verre ou de la céramique.
